# EUROPEAN PATENT APPLICATION

(11) **EP 3 188 094 A1**
(43) Date of publication of application: **05.07.2017**
(21) Application number: 16205538.8
(22) Date of filing: 20.12.2016
(51) Int. Cl.: G06Q 10/04, G06Q 10/06

(54) **METHOD AND DEVICE FOR CLASSIFICATION MODEL TRAINING**

(30) Priority: 30.12.2015 CN 201511020827
(71) Applicant: Xiaomi Inc., Beijing 100085 (CN)
(72) Inventor: WANG, Pingze, Beijing, 100085 (CN); ZHANG, Tao, Beijing, 100085 (CN); LONG, Fei, Beijing, 100085 (CN)
(74) Representative: Jeffrey, Philip Michael

(57) **Abstract**

The present disclosure provides a method and device for classification model training, which belongs to the field of information technology. The method for classification model training includes: acquiring (101) sample feature vectors of a plurality of users according to at least one feature set for each of the users; determining (102) gender identifiers of the users to which the sample feature vectors belong; and conducting (103) training based on the sample feature vectors and the gender identifiers corresponding to the sample characteristic vectors to obtain a gender classification model. The gender classification model can be applied to gender classification so as to determine gender of a user according to the user's sample message, and thereby information of the sample message can be increased in amount and flexibility can be provided.

## Description

### TECHNICAL FIELD

The present disclosure generally relates to the field of information technology, and more particularly, to a method and device for classification model training.

### BACKGROUND

Usually, when a user performs a login, shopping, payment and other operations on a website, the website will send a notification message to the user according to a telephone number registered by the user in advance in order to present an operation prompt to the user.

The notification message as such generally includes the user's personal information, so the user's personal information can be obtained through analysis of such notification message. For example, when a user buys goods on a website, the seller may send a notification message about express delivery to the user: "<# Name #> Hello, your ordered <# Order No. #> and the goods will shortly be delivered. The distribution company is <# Courier Company #>, and the tracking number is <# Tracking No. #>", from which the user's name, order number or the like can be learned.

However, the notification message seldom contains information about gender of a user, so it is impossible to determine the gender of the user.

### SUMMARY

In view of the fact in related arts, a method and device for classification model training are provided in the present disclosure. The technical solutions are as follows.

According to a first aspect of embodiments of the present disclosure, there is provided a method for classification model training. The method includes: acquiring sample feature vectors of a plurality of users according to at least one feature set for each of the users, wherein the at least one feature set for a user is determined from at least one sample message of the user; determining gender identifiers of the users to which the sample feature vectors belong; and conducting training based on the sample feature vectors and the gender identifiers corresponding to the sample feature vectors to obtain a gender classification model.

In an embodiment, conducting the training based on the sample feature vectors and the gender identifiers corresponding to the sample feature vectors to obtain the gender classification model includes: conducting the training based on the sample feature vectors and the gender identifiers corresponding to the sample feature vectors by using a decision tree algorithm to obtain the gender classification model.

In an embodiment, conducting the training based on the sample feature vectors and the gender identifiers corresponding to the sample feature vectors by using a decision tree algorithm to obtain the gender classification model includes: combining the sample feature vectors and the gender identifiers corresponding to the sample feature vectors to form an initial set of feature data; acquiring, at each level of the training, gain values of feature dimensions of a current set of feature data, wherein each feature dimension corresponds to a feature value at a corresponding position within the sample feature vectors, and the gain value represents extent to which the feature dimension corresponding to the gain value affects results of gender classification; determining a feature dimension within the current set of feature data that has the largest gain value as a test dimension, and constructing, at a current level, a node corresponding to the test dimension, the node being a branch node of an upper level node; dividing the current set of feature data into at least one subset in accordance with the at least one feature value corresponding to the test dimension in the current set of feature data, and deleting feature values corresponding to the test dimension from the at least one subset, to obtain at least one set of feature data; passing the at least one set of feature data to a next level and constructing a branch node of the node at the current level according to a corresponding set of feature data, until a current set of feature data contains only one kind of gender identifier; constructing a node according to the gender identifier; and combing the nodes constructed at multiple levels to form the gender classification model.

In an embodiment, the method further includes: classifying a target user based on the gender classification model to obtain a gender identifier of the target user.

In an embodiment, classifying the target user based on the gender classification model to obtain the gender identifier of the target user includes: acquiring a target feature vector of the target user according to at least one feature set for the target user, wherein the at least one feature set for the target user is determined from at least one target message of the target user; and determining the gender identifier of the target user according to the target feature vector and the gender classification model.

In an embodiment, the method further includes: acquiring the at least one target message of the target user every preset period, and determining the at least one feature set for the target user from the at least one target message; or acquiring the at least one target message of the target user upon detection that target messages of the target user have increased by a preset threshold number, and determining the at least one feature set for the target user from the at least one target message.

In an embodiment, the at least one feature set for the target user includes at least one of: a salutation feature set, an operation feature set and an application feature set.

In an embodiment, the salutation feature set includes a male salutation feature set and a female salutation feature set.

In an embodiment, the operation feature set includes at least one of the following parameters: the number of online shopping, the number of group-buying, and the amount of consumption per month.

In an embodiment, the application feature set includes one of the following parameters: the number of application APP registration, and gender specific APP.

According to a second aspect of embodiments of the present disclosure, there is provided a device for classification model training. The device includes: a first acquisition module configured to acquire sample feature vectors of a plurality of users according to at least one feature set for each of the users, wherein the at least one feature set for a user is determined from at least one sample message of the user; a determination module configured to determine gender identifiers of the users to which the sample feature vectors belong; and training module configured to conduct training based on the sample feature vectors and the gender identifiers corresponding to the sample feature vectors to obtain a gender classification model.

In an embodiment, the training module is further configured to conduct the training based on the sample feature vectors and the gender identifiers corresponding to the sample feature vectors by using a decision tree algorithm to obtain the gender classification model.

In an embodiment, the training module is further configured to: combine the sample feature vectors and the gender identifiers corresponding to the sample feature vectors to form an initial set of feature data; acquire, at each level of the training, gain values of feature dimensions of a current set of feature data, wherein each feature dimension corresponds to a feature value at a corresponding position within the sample feature vectors, and the gain value represents extent to which the feature dimension corresponding to the gain value affects results of gender classification; determine a feature dimension within the current set of feature data that has the largest gain value as a test dimension, and constructing, at a current level, a node corresponding to the test dimension, the node being a branch node of an upper level node; divide the current set of feature data into at least one subset in accordance with the at least one feature value corresponding to the test dimension in the current set of feature data, and deleting feature values corresponding to the test dimension from the at least one subset, to obtain at least one set of feature data; pass the at least one set of feature data to a next level and constructing a branch node of the node at the current level according to a corresponding set of feature data, until a current set of feature data contains only one kind of gender identifier; construct a node according to the gender identifier; and combine the nodes constructed at multiple levels to form the gender classification model.

In an embodiment, the device further includes a classifying module configured to classify a target user based on the gender classification model to obtain a gender identifier of the target user.

In an embodiment, the classifying module is further configured to acquire a target feature vector of the target user according to at least one feature set for the target user, wherein the at least one feature set for the target user is determined from at least one target message of the target user; and determine the gender identifier of the target user according to the target feature vector and the gender classification model.

In an embodiment, the device further includes a second acquisition module configured to acquire the at least one target message of the target user every preset period, and determining the at least one feature set for the target user from the at least one target message; or acquire the at least one target message of the target user upon detection that target messages of the target user have increased by a preset threshold number, and determining the at least one feature set for the target user from the at least one target message.

In an embodiment, the at least one feature set for the target user includes at least one of: a salutation feature set, an operation feature set and an application feature set.

In an embodiment, the salutation feature set includes a male salutation feature set and a female salutation feature set.

In an embodiment, the operation feature set includes at least one of the following parameters: the number of online shopping, the number of group-buying, and the amount of consumption per month.

In an embodiment, the application feature set includes one of the following parameters: the number of application APP registration, and gender specific APP.

According to a third aspect of embodiments of the present disclosure, there is provided a device for classification model training. The device includes: a processor; a memory configured to store instructions executable by the processor; wherein the processor is configured to: acquire sample feature vectors of a plurality of users according to at least one feature set for each of the users, wherein the at least one feature set for a user is determined from at least one sample message of the user; determine gender identifiers of the users to which the sample feature vectors belong; and conduct training based on the sample feature vectors and the gender identifiers corresponding to the sample feature vectors to obtain a gender classification model.

The technical solution of embodiments in the present disclosure can provide the following technical effects.

By acquiring sample feature vectors of a plurality of users according to at least one feature set for each of the users, wherein the at least one feature set for a user is determined from at least one sample message of the user, determining gender identifiers of the users to which the sample feature vectors belong, and conducting training based on the sample feature vectors and the gender identifiers corresponding to the sample feature vectors to obtain a gender classification model, the gender classification model can be applied to gender classification so as to determine gender of a user according to the user's sample message, and thereby information of the sample message can be increased in amount and flexibility can be provided.

In an embodiment, the training is conducted based on the sample feature vectors and the gender identifiers corresponding to the sample feature vectors by using a decision tree algorithm to obtain the gender classification model. For example, the algorithm includes: combining the sample feature vectors and the gender identifiers corresponding to the sample feature vectors to form an initial set of feature data; acquiring, at each level of the training, gain values of feature dimensions of a current set of feature data, wherein each feature dimension corresponds to a feature value at a corresponding position within the sample feature vectors, and the gain value represents extent to which the feature dimension corresponding to the gain value affects results of gender classification; determining a feature dimension within the current set of feature data that has the largest gain value as a test dimension, and constructing, at a current level, a node corresponding to the test dimension, the node being a branch node of an upper level node; dividing the current set of feature data into at least one subset in accordance with the at least one feature value corresponding to the test dimension in the current set of feature data, and deleting feature values corresponding to the test dimension from the at least one subset, to obtain at least one set of feature data; passing the at least one set of feature data to a next level and constructing a branch node of the node at the current level according to a corresponding set of feature data, until a current set of feature data contains only one kind of gender identifier; constructing a node according to the gender identifier; and combing the nodes constructed at multiple levels to form the gender classification model. Through training of the plurality of the sample feature vectors and the gender identifiers of the users to which the sample feature vectors belong and construction of nodes at multiple levels according to different feature dimensions, an accurate gender classification model can be obtained. Based on the gender classification model, the accuracy of determining gender of a user can be improved.

In an embodiment, a target user is classified based on the gender classification model to obtain a gender identifier of the target user. Through classification of the target user, information available can be increased in amount, and flexibility can be provided.

In an embodiment, when the target user is classified, at least one target message of the target user is acquired, at least one feature set for the target user is determined according to the at least one target message of the target user, and a target feature vector of the target user is acquired and is entered into the trained gender classification model such that the gender of the target user is obtained based on the target feature vector of the target user and the gender classification model. When classifying a target user after the gender classification model is obtained through training of sample feature vectors of a plurality of users that are determined according to at least one feature set from sample messages of the respective users, at least one feature set for the target user is determined from at least one target message of the target user, and a target feature vector of the target user is acquired, and thus the gender of the target user can be determined by making calculation on the target feature vector based on the gender classification model, and thereby accuracy can be improved.

In an embodiment, the at least one target message of the target user is acquired every preset period, and the at least one feature set for the target user is determined from the at least one target message such that a newest target feature vector can be obtained for the target user and be used to determine gender identifier of the target user. Alternatively, the at least one target message of the target user is acquired upon detection that target messages of the target user have increased by a preset threshold number, and the at least one feature set for the target user is determined from the at least one target message such that a newest target feature vector can be obtained for the target user and be used to determine gender identifier of the target user. Through acquisition of at least one target message of the target user every preset period or upon detection that target messages of the target user have increased by a preset threshold number, the gender identifier of the target user can be re-determined based on the newly acquired target messages, and thereby accuracy of classification can be improved.

In an embodiment, the at least one feature set for the target user includes at least one of: a salutation feature set, an operation feature set and an application feature set, wherein the salutation feature set includes a male salutation feature set and a female salutation feature set, the operation feature set includes at least one of the following parameters: the number of online shopping, the number of group-buying, and the amount of consumption per month, and the application feature set includes one of the following parameters: the number of application APP registration, and gender specific APP. Through division of features of the feature dimensions of the sample feature vectors in to three types in accordance with salutation in the sample messages, operations indicated in the sample messages and applications indicated in the sample messages, management of the feature dimensions of the sample feature vectors and the target feature vector is enabled to be easier, and thereby efficiency of acquiring the sample feature vectors and the target feature vector can be improved.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for classification model training according to an exemplary embodiment;
Fig. 2 is a flow chart of a method for classification model training according to another exemplary embodiment;
Fig. 3 is a schematic diagram illustrating a classification model according to an exemplary embodiment;
Fig. 4 is a block diagram of a device for classification model training according to an exemplary embodiment;
Fig. 5 is a block diagram of a device for classification model training according to another exemplary embodiment;
Fig. 6 is a block diagram of a device for classification model training according to yet another exemplary embodiment;
Fig. 7 is a block diagram of a device for classification model training according to yet another exemplary embodiment; and
Fig. 8 is a block diagram of a device for classification model training according to yet another exemplary embodiment.

### DETAILED DESCRIPTION

The exemplary embodiments, as shown in the accompany drawings, will be described in detail. When referring to the drawings in the following descriptions, the same reference number throughout the figures represents the same or similar element, unless otherwise indicated. The implementations described in the following exemplary embodiments are not representative of all the implementations that are consistent with this disclosure. Instead, they are only examples of devices and methods that are consistent with some aspects of the disclosure, as described in the accompanying claims.

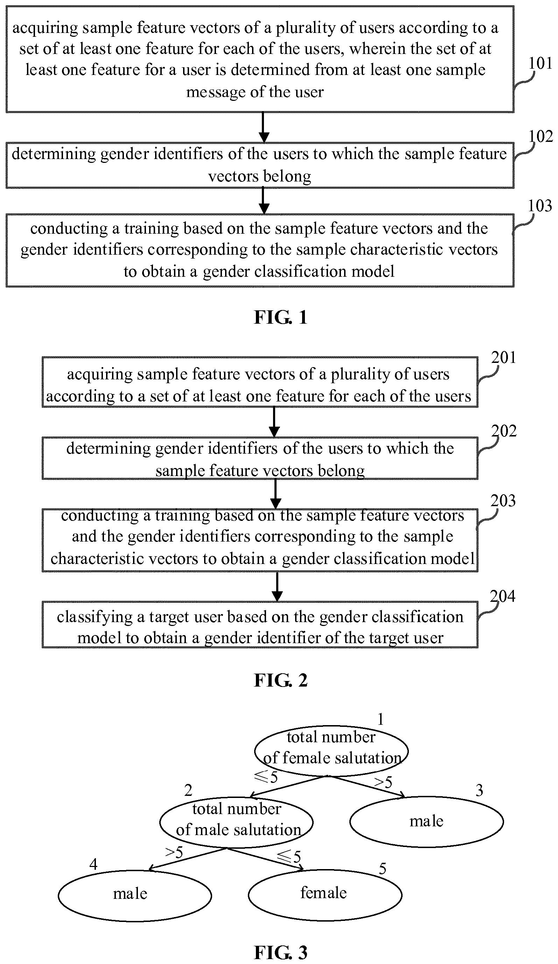

Fig. 1 is a flow chart of a method for classification model training according to an exemplary embodiment. The method for classification model training as shown in Fig.1 can be used in a classification device. The method may include the following steps.
Step 101: sample feature vectors of a plurality of users are acquired according to at least one feature set for each of the users, wherein the at least one feature set for a user is determined from at least one sample message of the user.
Step 102: gender identifiers of the users to which the sample feature vectors belong are determined.
Step 103: training is conducted based on the sample feature vectors and the gender identifiers corresponding to the sample feature vectors to obtain a gender classification model.

In summary, the method for classification model training of the present embodiment obtains a gender classification model by acquiring sample feature vectors of a plurality of users according to at least one feature set for each of the users, determining gender identifiers of the users to which the sample feature vectors belong and conducting training based on the sample feature vectors and the gender identifiers corresponding to the sample characteristic vectors to obtain a gender classification model. The gender classification model can be applied to gender classification so as to determine gender of a user according to the user's sample message, and thereby information of the sample message can be increased in amount and flexibility can be provided.

In an embodiment, conducting the training based on the sample feature vectors and the gender identifiers corresponding to the sample feature vectors to obtain the gender classification model may include: conducting the training based on the sample feature vectors and the gender identifiers corresponding to the sample feature vectors by using a decision tree algorithm to obtain the gender classification model.

In an embodiment, conducting the training based on the sample feature vectors and the gender identifiers corresponding to the sample feature vectors by using a decision tree algorithm to obtain the gender classification model may include: combining the sample feature vectors and the gender identifiers corresponding to the sample feature vectors to form an initial set of feature data; acquiring, at each level of the training, gain values of feature dimensions of a current set of feature data, wherein each feature dimension corresponds to a feature value at a corresponding position within the sample feature vectors, and the gain value represents extent to which the feature dimension corresponding to the gain value affects results of gender classification; determining a feature dimension within the current set of feature data that has the largest gain value as a test dimension, and constructing, at a current level, a node corresponding to the test dimension, the node being a branch node of an upper level node; dividing the current set of feature data into at least one subset in accordance with the at least one feature value corresponding to the test dimension in the current set of feature data, and deleting feature values corresponding to the test dimension from the at least one subset, to obtain at least one set of feature data; passing the at least one set of feature data to a next level and constructing a branch node of the node at the current level according to a corresponding set of feature data, until a current set of feature data contains only one kind of gender identifier; constructing a node according to the gender identifier; and combing the nodes constructed at multiple levels to form the gender classification model.

In an embodiment, the method may further include: classifying a target user based on the gender classification model to obtain a gender identifier of the target user. In an embodiment, classifying the target user based on the gender classification model to obtain the gender identifier of the target user may include: acquiring a target feature vector of the target user according to at least one feature set for the target user, wherein the at least one feature set for the target user is determined from at least one target message of the target user; and determining the gender identifier of the target user according to the target feature vector and the gender classification model.

In an embodiment, the method may further include: acquiring the at least one target message of the target user every preset period, and determining the at least one feature set for the target user from the at least one target message; or acquiring the at least one target message of the target user upon detection that target messages of the target user have increased by a preset threshold number, and determining the at least one feature set for the target user from the at least one target message.

In an embodiment, the at least one feature set for the target user may include at least one of: a salutation feature set, an operation feature set and an application feature set.

In an embodiment, the salutation feature set may include a male salutation feature set and a female salutation feature set.

In an embodiment, the operation feature set may include at least one of the following parameters: the number of online shopping, the number of group-buying, and the amount of consumption per month.

In an embodiment, the application feature set may include one of the following parameters: the number of APP (application) registration, and gender specific APP.

Fig. 2 is a flow chart of a method for classification model training according to an exemplary embodiment. The method for classification model training can be used in a classification device, and may include the following steps, as shown in Fig. 2.

In step S201, sample feature vectors of a plurality of users are acquired according to at least one feature set for each of the users.

The classification device may be a terminal or a server. The present embodiment is not limited thereto.

In the present embodiment, in order to accurately classify a user to determine gender of the user, a gender classification model can be obtained by training in advance.

For each user, the classification device may consider a historical message of the user as a sample message. From at least one sample message, at least one feature set are obtained as feature sets of the user. According to the at least one feature set for each of the plurality of the users, sample feature vectors of the users are acquired. Then, the sample feature vectors of the plurality of users are trained to obtain a gender classification model.

The historical message may include a message that has been received or transmitted by the user, and among others. Since a notification message may contain more gender features than other kinds of messages, the classification device may acquire at least one notification message from historical messages of the user and acquires the at least one feature set according to the at least one notification message as a set of features for the user, in order to reduce amount of calculation. The present embodiment is not limited thereto.

The sample feature vector of a user may include feature values for multiple feature dimensions. The feature dimensions of the sample feature vector may include the following parameters: the total number of male salutation, the number of online shopping, the number of App registration, or the like. The present disclosure is not limited thereto. In each same feature vector, one feature dimension corresponds to one feature value, and the feature values corresponding to the feature dimensions may vary, depending on detailed information of the at least one sample message of the user.

For example, the sample feature vector may include three feature dimensions: a parameter of total number of male salutation, a parameter of number of online shopping, a parameter of number of App registration. Assuming a user has ten sample messages, among which there are three sample messages containing the salutation "Sir", five sample messages that are express delivery messages, and four sample messages that are verification messages for a APP registration, the sample feature vector of the user has a feature value of 3 under the parameter of "total number of male salutation", and a feature value of 5 under the parameter of "number of online shopping", and a feature value of 4 under the parameter of "number of APP registration". That is, the sample feature vector of the user is {3, 5, 4}.

The sample feature vector may have multiple feature dimensions. In order for easier management of the feature dimensions of the sample feature vector, the multiple feature dimensions can be divided into three feature sets: a salutation feature set, an operation feature set, and an application feature set, according to salutation in the sample messages, operation indicated in the sample messages, and applications indicated in the sample messages. Thus, the feature sets for the user may include at least one of the salutation feature set, the operation feature set, and the application feature set.

The three feature sets may be as follows.
1. The salutation feature set is a feature set of salutation in at least one sample message. The salutation feature set may include a male salutation feature set and a female salutation feature set. The salutation in at least one sample message may be "Sir", "Handsome boy", "Madam", "Miss", "Beautiful girl", etc., among which there are male salutation and female salutation. The feature dimension to which the male salutation feature set corresponds may include a parameter of total number of male salutation, and the feature dimension to which the male salutation feature set corresponds may include a parameter of total number of female salutation. In addition, the feature dimension to which the salutation feature set corresponds may include an indication whether the parameter of total number of male salutation is larger than the parameter of total number of female salutation, etc.
2. The operation feature set is a feature set of operation indicated in at least one sample message. The operation feature set may include one of the following parameters: number of online shopping, number of group-buying and amount of consumption per month. The operation feature set may include parameters of other operation features.
   For example, for a user, the parameter of number of online shopping can be obtained from the number of express delivery messages for the user; the parameter of number of group-buying can be obtained from the number of the group-buying messages for the user; and the amount of consumption per month can be obtained from a credit card bill message for the user. The parameter of the amount of consumption per month may include a parameter of number of consumption, a parameter of average amount of consumption, etc.
3. The application feature set is a feature set of APP indicated in the at least of sample message. The application feature set may include one of the following parameters: number of APP registration, gender specific APP. The application feature set may include other APP related parameters.

For example, the number of APP registration may be obtained according to a verification code message when an APP was being registered, and the gender specific APP may be obtained according to the type of an APP registered. The gender specific APP may include female specific APP and male specific APP. For example, a female person may usually use a female specific APP such as a menstruation management APP, a cosmetics-buying APP, a clothes-buying APP, a beauty construction APP. The parameters of a female specific APP may include: whether or not to use a menstruation management APP, the number of cosmetics-buying APP registration, the number of clothes-buying APP registration. In another hand, a male person may usually use a male specific APP such as a financing management APP, a game-play APP, a sports APP, a news APP. The parameters of a male specific APP may include: the number of financing management APP registration, the number of game-play APP registration, whether or not to use a sports APP, whether or not to use a news APP.

After the classification acquires feature values of at least one sample message under each of a plurality of feature dimensions, the feature values under the plurality of feature dimensions can be combined to form the feature sets, from which the sample feature vector of the user may be obtained.

For example, assuming that a user has twenty sample messages, among which there are four sample messages containing the salutation "Sir", one sample message containing "Handsome boy", five sample messages that are express delivery messages, three sample messages that are group-buying messages, and twelve sample messages that are verification code messages for registration, and among the twelve verification code messages, there are five verification code messages for game-play APP registration, then according to the five feature dimensions, i.e. the parameters of the total number of male salutation, the number of online shopping, the number of group buying, the number of APP registration and the number of game-play- APP registration, the feature values under the five parameters can be determined as 5, 5, 3, 12, 5, and thus the sample feature vector of the user is {5, 5, 3, 12, 5}.

In step S202, gender identities of the users to which the sample feature vectors belong are determined.

The classification device can determine a gender identifier for each of the users. The gender identifier may be male or female. For a user, the gender identifier of the user may serve as a result of classifying the sample feature vector of the user. Training then can be conducted according to the sample feature vectors and the gender identities of the users to which the respective sample feature vectors belong to obtain a gender classification model.

In step S203, training is conducted based on the sample feature vectors and the gender identifiers corresponding to the sample feature vectors to obtain a gender classification model.

After obtaining the sample feature vectors of the users, the classification device can conduct training on the sample feature vectors and the gender identities corresponding to the respective sample feature vectors by using a decision tree algorithm to obtain a gender classification model. Alternatively, the classification device may utilize other algorithms such as SVM (Support Vector Machine) or the like to conduct training to obtain the gender classification model. The preset algorithm for training in the present disclosure is not limited thereto.

For example, conducting training on the sample feature vectors and the gender identities corresponding to the respective sample feature vectors by using the decision tree algorithm to obtain a gender classification model may include the following steps.
1. The classification device combines the sample feature vectors and the gender identities corresponding to the respective sample feature vectors to form an initial set of feature data.
2. At each level of the training, the classification device acquires gain values of feature dimensions of a current set of feature data,, determines a feature dimension within the current set of feature data that has the largest gain value as a test dimension, and construct, at a current level, a node corresponding to the test dimension, a node being a branch node of an upper level node.
For example, the set of feature data by combing the sample feature vectors of the plurality of users and the gender identities of the users to which the sample feature vectors belong is shown in Table 1 below. In the table, the male identifier is denoted with "1", and the female identifier is denoted with "0".

**Table 1**

| User | The total number of male salutation | The total number of female salutation | The number of online shopping | The number of express delivery | The number of group-buying | Average amount of consumption | The number of APP registration | The number of game-play APP registration | Gender identifier |
|---|---|---|---|---|---|---|---|---|---|
| A | 12 | 0 | 7 | 10 | 3 | 200 | 35 | 9 | 1 |
| B | 1 | 15 | 13 | 15 | 9 | 178 | 45 | 1 | 0 |
| C | 13 | 7 | 5 | 6 | 11 | 107 | 39 | 7 | 1 |
| D | 20 | 2 | 7 | 9 | 7 | 153 | 29 | 5 | 1 |
| E | 2 | 18 | 15 | 20 | 13 | 137 | 33 | 0 | 0 |

A gain value of each feature dimension in the set of feature data of Table 1 is calculated, and the feature dimension of "the total number of female salutation" is determined to have the largest gain value, and thus is determined as a test dimension. According to the set of feature data and the test dimension, a node 1 is constructed, as shown in Fig. 3.
3. According to at least one feature value corresponding to the test dimension in the set of feature data, the current set of feature data is divided into at least one subset, and the feature values corresponding to the test dimension in the at least subset are deleted such that at least one set of feature data is obtained.
Each feature dimension corresponds to a feature value at a corresponding position of the plurality of sample feature vectors. The gain value for a feature dimension represents extent to which the feature dimension affects results of gender classification. The gain value of each feature dimension may be calculated by using an algorithm such as Information Gain algorithm, a Chi-square test, etc. The present disclosure is not limited thereto.
In addition, the division of the set of feature data into at least one subset according to at least one feature value corresponding to the test dimension in the set of feature data may include the step of the following Method 1 or Method 2.
Method 1: the set of feature data is divided into a plurality of subsets based on that the at least one feature value to which the test dimension corresponds are different such that the feature values corresponding to the test dimension within a same subset are equal but different from those within a different subset.
Method 2: the at least one feature values corresponding to the test dimension are divided into a plurality of ranges based on that the at least one feature values belongs to different ranges, and the set of feature data is divided into a plurality of subsets such that the feature values corresponding to the test dimension within a same subset belong to a same range but different from those within a different subset.
By referring to Fig. 3 and using the same example as that discussed with respect to the above steps 1 and 2, each sample feature vector has two kinds of feature values under the test dimension of "the total number of female salutation", i.e. >5, and ≤5. The sample feature vectors having a parameter "the total number of female salutation" that is more than 5 within the set of feature data is used as a subset of feature data, and the sample feature vectors having a parameter "the total number of female salutation" that is not more than 5 within the set of feature data is used as another subset of feature data. By deleting the feature values under the dimension of "the total number of female salutation" from the two subsets of feature data, the following two sets of feature data are obtained, as shown in Table 2 and Table 3.

**Table 2**

| User | The total number of male salutation | The number of online shopping | The number of express delivery | The number of group-buying | Average amount of consumption | The number of APP registration | The number of game-play APP registration | Gender identifier |
|---|---|---|---|---|---|---|---|---|
| B | 1 | 13 | 15 | 9 | 178 | 45 | 1 | 0 |
| C | 13 | 5 | 6 | 11 | 107 | 39 | 7 | 1 |
| E | 2 | 15 | 20 | 13 | 137 | 33 | 0 | 0 |

**Table 3**

| User | The total number of male salutation | The number of online shopping | The number of express delivery | The number of group-buying | Average amount of consumption | The number of APP registration | The number of game-play APP registration | Gender identifier |
|---|---|---|---|---|---|---|---|---|
| A | 12 | 7 | 10 | 3 | 200 | 35 | 9 | 1 |
| D | 20 | 7 | 9 | 7 | 153 | 29 | 5 | 1 |

4. The at least one sets of feature data obtained by division according to the at least one feature value corresponding to the test dimension are passed to a next level, and at the next level, the steps 2 and 3 are repeated to construct a node, the node being a branch node of a node constructed at the current level under a corresponding feature value conditions, until a current set of feature data contains only one kind of gender identifier. Then, a node is constructed according to the gender identifier. The nodes constructed at multiple levels are combined to form a gender classification model.

If a current level is a first layer, the classification device can construct one node according to the determined test dimension, and constructs branches nodes at a second level according to the feature values corresponding to the test dimension, and perform the steps 2 to step 4 continuously on the set of feature data of each node of the second level, and so on, until a current set of feature data contains only one kind of gender identifier.

When constructing a node, a determination is firstly made as to whether or not the current set of feature data contains only one kind of gender identifier. If the current set of feature data contains only one kind of gender identifier, a node is constructed directly according to the gender identifier without calculation of a test dimension. If the current set of feature data contains multiple gender identifiers, a test dimension should be calculated according to the current set of feature data, and then a node is constructed as a branch node of an upper level.

Using the same example as that discussed with respect to the above steps 1-4 and by referring to Fig. 3, the two divided sets of feature data are passed to the second level. At the second level, since the set of feature data shown in Table 2 contains two kinds of gender identifiers, 1 and 0, a feature dimension that has the largest gain value is calculated, i.e. "the total number of male salutation", and the feature dimension is determined as a test dimension to construct the node 2. In addition, since the set of feature data shown in Table 3 contains only one kind of gender identifier, i.e. 1, there is no need to calculate a test dimension, and the node 3 "male" is constructed directly. The node 2 and node 3 are branch nodes of the node 1, wherein the node 2 is a branch node of the node 1 under the condition that the total number of female salutation is more than 5, and the node 3 is a branch node of the node 1 under the condition that the total number of female salutation is not more than 5.

With respect to the node 2, the test dimension of "the total number of male salutation" within the set of feature data shown in Table 2 contains two kinds of feature values, >5, and ≤5. The sample feature vectors having a parameter "the total number of male salutation" that is more than 5 within the set of feature data is used as a subset of feature data, and the sample feature vectors having a parameter "the total number of male salutation" that is not more than 5 within the set of feature data is used as another subset of feature data. By deleting the feature values under the dimension of "the total number of male salutation" from the two subsets of feature data, the following two sets of feature data are obtained, as shown in Table 4 and Table 5.

**Table 4**

| User | | The number of online shopping | The number of express delivery | The number of group-bu ying | Average amount of consumption | The number of APP registration | The number of game-play APP registration | Gender identifier |
|---|---|---|---|---|---|---|---|---|
| C | | 5 | 6 | 11 | 107 | 39 | 7 | 1 |

**Table 5**

| User | | The number of online shopping | The number of express delivery | The number of group-buying | Average amount of consumption | The number of APP registration | The number of game-play APP registration | Gender identifier |
|---|---|---|---|---|---|---|---|---|
| B | | 13 | 15 | 9 | 178 | 45 | 1 | 0 |
| E | | 15 | 20 | 13 | 137 | 33 | 0 | 0 |

The sets of feature data shown in Table 4 and Table 5 are passed to the third level. At the third level, since the set of feature data shown in both Table 4 and Table 5 contains only one kind of gender identifier, there is no need to calculate a test dimension, and thus the node 4 "male" and node 5 "female" are constructed directly. The node 4 and node 5 are used as branch nodes of the node 2, wherein the node 4 is a branch node of the node 2 under the condition that "the total number of male salutation" is more than 5, and the node 5 is a branch node of the node 2 under the condition that "the total number of male salutation" is not more than 5. Until now, nodes 1-5 are obtained and then are combined to form a gender classification model.

In step 204, a target user is classified based on the gender classification model to obtain a gender identifier of the target user.

When classifying the target user after the gender classification model is obtained, the classification device may acquire at least one target message of the target user, including a message that has been sent or received by the target user, determine at least one feature set according to the at least one target message of the target user, acquire a target feature vector according to the at least one feature set of the target user, enter the target feature vector into the gender classification model obtained by training to determine the gender identifier of the target user based on the target feature vector and the gender classification model, so as to achieve gender classification of the target user.

Since a notification message may contain more features, the classification device may acquire a notification messages from a plurality of messages of the target user as a target message. For example, regarding each message of the target user, the classification device determines whether the phone number from which the message was sent is a preset number or not, and if it is a preset number, the message can be determined as a notification message.

The preset number may be a phone number of a seller, a phone number of a courier company, a phone number of a bank, or a phone number of a preset organization. The present disclosure is not limited thereto.

When the classification device acquires the target feature vector, the number of dimensions of the target feature vector is the same as the number of the dimensions of the sample feature vector, and each dimension of the target feature vector correspond to each of the dimensions of the sample feature vector, in order to obtain the gender identifier of the user according to the gender classification model.

The procedure of acquiring the target feature vector in step 204 is the same as that of acquiring the sample feature vector in step 201, so it is not redundantly repeated.

In addition, in order to improve accuracy of classification, at least one message of the target user can be obtained many times, and classification is conducted again and again according the at least target message obtained each time such that the gender identifier of the target user can be updated.

The target messages can be acquired by each of the following methods.
1. The classification device can acquire the at least one target message of the target user every preset period, and determine the at least one feature set for the target user from the at least one target message, to obtain a latest target feature vector so as to determine the gender identifier of the target user.
2. The classification device can acquire the at least one target message of the target user upon detection that target messages of the target user have increased by a preset threshold number, and determine the at least one feature set for the target user from the at least one target message, to obtain a latest target feature vector so as to determine the gender identifier of the target user.

The at least target message can be acquired at other timing to determine a latest target feature vector so as to determine the gender identifier of the target user. The present disclosure is not limited thereto.

When acquiring the at least target message of the target user, all of the target messages of the target user until now can be acquired, or only newly increased target messages are acquired with those target messages that have been acquired last time being ignored. The present disclosure is not limited thereto.

Upon determination of the gender identifier of the target user, the gender of the target user is determined. Considering a user with a different gender may have a different hobby, information to be recommended can be separated to female-like information and male-like information, and the information will be recommended according to the gender of the target user.

For example, a male person can be recommended with information about sports news and outdoor products; while a female person can be recommended with information about shopping discount and cosmetics.

In summary, the method for classification model training of the present disclosure obtains a gender classification model by acquiring sample feature vectors of a plurality of users according to at least one feature set for each of the users, determining gender identifiers of the users to which the sample feature vectors belong and conducting training based on the sample feature vectors and the gender identifiers corresponding to the sample characteristic vectors to obtain a gender classification model. The gender classification model can be applied to gender classification so as to determine gender of a user according to the user's sample message, and thereby information of the sample message can be increased in amount and flexibility can be provided.

The following descriptions are related to a device of the present disclosure that can be used to perform the methods as described in the above embodiments. As to some details not described with respect to the device, please refer to those in the method embodiments.

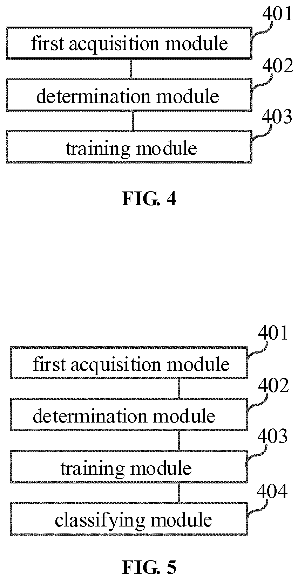

Fig. 4 is a block diagram of a device for classification model training according to an exemplary embodiment. As shown in Fig. 4, the device for classification model training includes: a first acquisition module 401, a determination module 402 and a training module 403.

The first acquisition module 401 is configured to acquire sample feature vectors of a plurality of users according to at least one feature set for each of the users, wherein the at least one feature set for a user is determined from at least one sample message of the user.

The determination module 402 is configured to determine gender identifiers of the users to which the sample feature vectors belong.

The training module 403 is configured to conduct training based on the sample feature vectors and the gender identifiers corresponding to the sample feature vectors to obtain a gender classification model.

The classification device of the present embodiment obtains a gender classification model by acquiring sample feature vectors of a plurality of users according to at least one feature set for each of the users, determining gender identifiers of the users to which the sample feature vectors belong and conducting training based on the sample feature vectors and the gender identifiers corresponding to the sample characteristic vectors to obtain a gender classification model. The gender classification model can be applied to gender classification so as to determine gender of a user according to the user's sample message, and thereby information of the sample message can be increased in amount and flexibility can be provided.

In an embodiment, the training module 403 is further configured to conduct the training based on the sample feature vectors and the gender identifiers corresponding to the sample feature vectors by using a decision tree algorithm to obtain the gender classification model.

In an embodiment, the training module 403 is further configured to: combine the sample feature vectors and the gender identifiers corresponding to the sample feature vectors to form an initial set of feature data; acquire, at each level of the training, gain values of feature dimensions of a current set of feature data, wherein each feature dimension corresponds to a feature value at a corresponding position within the sample feature vectors, and the gain value represents extent to which the feature dimension corresponding to the gain value affects results of gender classification; determine a feature dimension within the current set of feature data that has the largest gain value as a test dimension, and constructing, at a current level, a node corresponding to the test dimension, the node being a branch node of an upper level node; divide the current set of feature data into at least one subset in accordance with the at least one feature value corresponding to the test dimension in the current set of feature data, and deleting feature values corresponding to the test dimension from the at least one subset, to obtain at least one set of feature data; pass the at least one set of feature data to a next level and constructing a branch node of the node at the current level according to a corresponding set of feature data, until a current set of feature data contains only one kind of gender identifier; construct a node according to the gender identifier; and combine the nodes constructed at multiple levels to form the gender classification model.

In an embodiment, the device may further include a classifying module 404, as shown in Fig.5. The classifying module 404 is configured to classify a target user based on the gender classification model to obtain a gender identifier of the target user.

In an embodiment, the classifying module 404 is further configured to: acquire a target feature vector of the target user according to at least one feature set for the target user, wherein the at least one feature set for the target user is determined from at least one target message of the target user; and determine the gender identifier of the target user according to the target feature vector and the gender classification model.

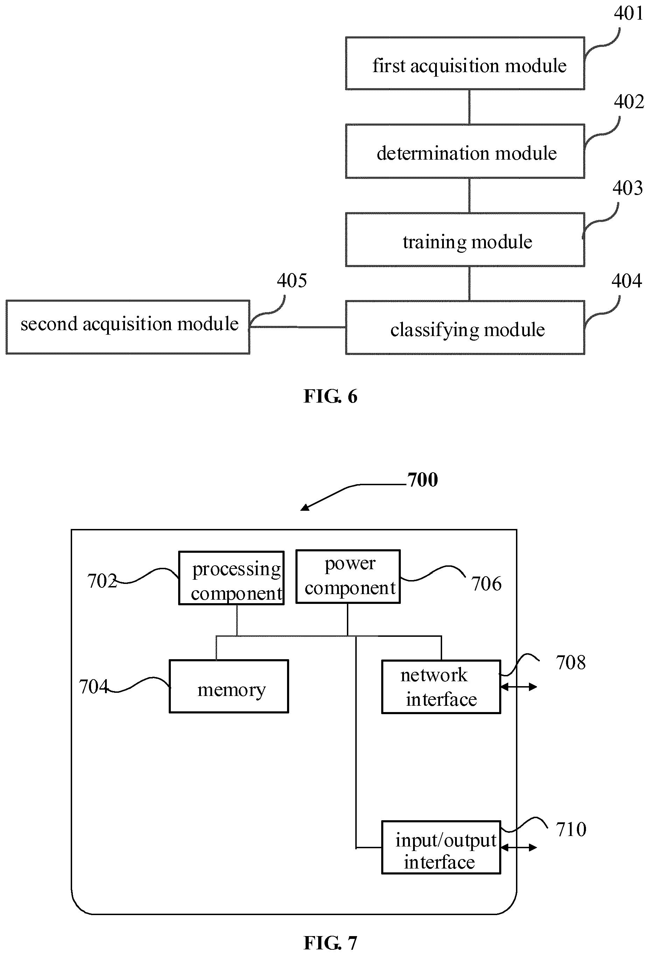

In an embodiment, the device may further include a second acquisition module 405, as shown in Fig.6. The second acquisition module 405 is configured to acquire the at least one target message of the target user every preset period, and determining the at least one feature set for the target user from the at least one target message; or acquire the at least one target message of the target user upon detection that target messages of the target user have increased by a preset threshold number, and determining the at least one feature set for the target user from the at least one target message.

In an embodiment, the at least one feature set for the target user may include at least one of: a salutation feature set, an operation feature set and an application feature set.

In an embodiment, the salutation feature set may include a male salutation feature set and a female salutation feature set.

In an embodiment, the operation feature set may include at least one of the following parameters: the number of online shopping, the number of group-buying, and the amount of consumption per month.

In an embodiment, the application feature set may include one of the following parameters: the number of application APP registration, and gender specific APP.

The specific way for the various modules of the device of the present embodiment to perform their operations has been described in detail with respect to the method embodiment, so it is not described redundantly.

Fig. 7 is a block diagram of a device for classification model training according to yet another exemplary embodiment. The device 700 may be provided as a server, for example. As shown in Fig. 7, the device 700 may include a processing component 702, which in turn may include one or more processors. The device 700 may further include memory resources denoted by a memory 704, for storing instructions such as application programs executable by the processing component 702. The application programs stored in the memory 704 may include one or more modules, each of which corresponds to a set of instructions. Further, the processing component 702 is configured to execute the instructions to perform the method for classification model training as described above.

The device 700 may also include a power component 706 configured to perform power management of the device 700, a wired or wireless network interface 708 configured to connect the device 700 to a network, and an input/output (I/O) interface 710. The device can operate based on an operating systems stored in the memory 704, such as Windows Server™, Mac OS X™, Unix™, Linux™, FreeBSD™, or the like.

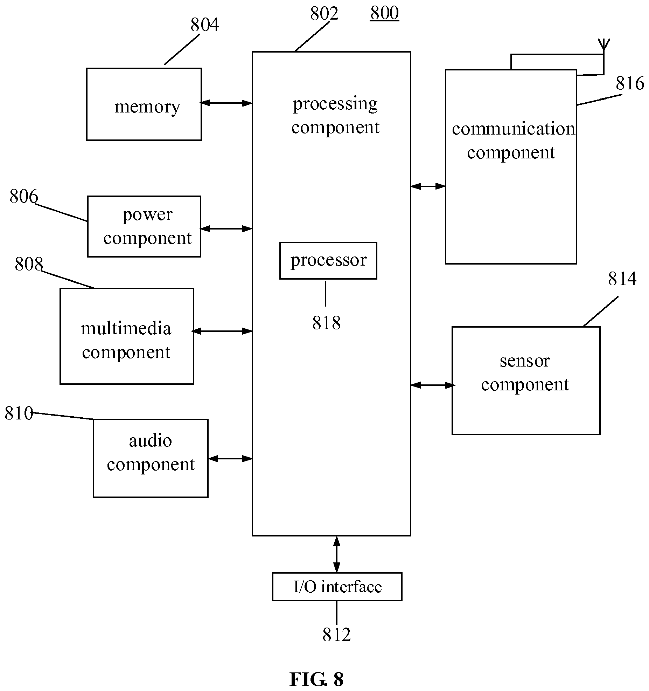

Fig. 8 is a block diagram of a device for classification model training according to yet another exemplary embodiment. The device 800 may be, for example, a mobile phone, a computer, a digital broadcast terminal, a messaging device, a gaming console, a tablet, a medical device, an exercise equipment, a personal digital assistant, and the like.

Referring to Fig. 8, the devicde 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 818 to execute instructions to perform all or part of the steps in the above described methods. Moreover, the processing component 802 may include one or more modules which facilitate interaction between the processing component 802 and other components. For instance, the processing component 802 may include a multimedia module to facilitate interaction between the multimedia component 808 and the processing component 802.

The memory 804 is configured to store various types of data to support the operation of the device 800. Examples of such data may include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with generation, management, and distribution of power for the device 800.

The multimedia component 808 include a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have optical focusing and zooming capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 may further include a speaker to output audio signals.

The I/O interface 812 provides an interface between the processing component 802 and peripheral interface modules, the peripheral interface modules being, for example, a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components (e.g., the display and the keypad, of the device 800), a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G or 3G or a combination thereof. In an exemplary embodiment, the communication component 816 receives a broadcast signal or broadcast associated information from an external broadcast management system via a broadcast channel. In an exemplary embodiment, the communication component 816 may further include a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 704 containing instructions. The instructions can be executed by the processor 818 in the device 800, for performing the above-described method for classification model training. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and embodiments be considered as exemplary only, with a true scope of the invention being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for classification model training, **characterized in that** the method comprising:
acquiring (101, 201) sample feature vectors of a plurality of users according to at least one feature set for each of the users, wherein the at least one feature set for a user is determined from at least one sample message of the user;
determining (102, 202) gender identifiers of the users to which the sample feature vectors belong; and
conducting (103, 203) training based on the sample feature vectors and the gender identifiers corresponding to the sample feature vectors to obtain a gender classification model.

2. According to the method of claim 1, wherein conducting the training based on the sample feature vectors and the gender identifiers corresponding to the sample feature vectors to obtain the gender classification model comprises:
conducting the training based on the sample feature vectors and the gender identifiers corresponding to the sample feature vectors by using a decision tree algorithm to obtain the gender classification model.

3. According to the method of claim 2, wherein conducting the training based on the sample feature vectors and the gender identifiers corresponding to the sample feature vectors by using a decision tree algorithm to obtain the gender classification model comprises:
combining the sample feature vectors and the gender identifiers corresponding to the sample feature vectors to form an initial set of feature data;
acquiring, at each level of the training, gain values of feature dimensions of a current set of feature data, wherein each feature dimension corresponds to a feature value at a corresponding position within the sample feature vectors, and the gain value represents extent to which the feature dimension corresponding to the gain value affects results of gender classification;
determining a feature dimension within the current set of feature data that has the largest gain value as a test dimension, and constructing, at a current level, a node corresponding to the test dimension, the node being a branch node of an upper level node;
dividing the current set of feature data into at least one subset in accordance with the at least one feature value corresponding to the test dimension in the current set of feature data, and deleting feature values corresponding to the test dimension from the at least one subset, to obtain at least one set of feature data;
passing the at least one set of feature data to a next level and constructing a branch node of the node at the current level according to a corresponding set of feature data, until a current set of feature data contains only one kind of gender identifier;
constructing a node according to the gender identifier; and
combing the nodes constructed at multiple levels to form the gender classification model.

4. According to the method of claim 1, further comprising:
classifying (204) a target user based on the gender classification model to obtain a gender identifier of the target user.

5. According to the method of claim 4, wherein classifying the target user based on the gender classification model to obtain the gender identifier of the target user comprises:
acquiring a target feature vector of the target user according to at least one feature set for the target user, wherein the at least one feature set for the target user is determined from at least one target message of the target user; and
determining the gender identifier of the target user according to the target feature vector and the gender classification model.

6. According to the method of claim 5, further comprising:
acquiring the at least one target message of the target user every preset period, and determining the at least one feature set for the target user from the at least one target message; or
acquiring the at least one target message of the target user upon detection that target messages of the target user have increased by a preset threshold number, and determining the at least one feature set for the target user from the at least one target message.

7. According to the method of claim 1, wherein the at least one feature set for the target user comprises at least one of: a salutation feature set, an operation feature set and an application feature set.

8. According to the method of claim 7, wherein the salutation feature set comprises a male salutation feature set and a female salutation feature set.

9. According to the method of claim 7, wherein the operation feature set comprises at least one of the following parameters: the number of online shopping, the number of group-buying, and the amount of consumption per month.

10. According to the method of claim 7, wherein the application feature set comprises one of the following parameters: the number of application APP registration, and gender specific APP.

11. A device for classification model training, comprising various modules for performing the steps of a method for classification model training according to any one of claims 1 to 10

12. A computer program including instructions for executing the steps of a method for classification model training according to any one of claims 1 to 10 when said program is executed by a computer.

13. A recording medium readable by a computer and having recorded thereon a computer program including instructions for executing the steps of a method for classification model training according to any one of claims 1 to 10.
